# FASCICULE DE BREVET EUROPEEN

(11) **EP 1 167 992 B1**
(45) Date de publication et mention de la délivrance du brevet: **08.10.2003**
(21) Numéro de dépôt: 01401526.7
(22) Date de dépôt: 13.06.2001
(51) Int. Cl.: G01S 3/786, F41G 7/22

(54) **Dispositif de localisation d'un object**
Einrichtung zur Ortung eines Objektes
Device for Locating an Object

(30) Priorité: 19.06.2000 FR 0007787
(43) Date de publication de la demande: 02.01.2002
(73) Titulaire: Aerospatiale Matra Missiles, 75116 Paris (FR)
(72) Inventeur: Merle, Jean-Pierre, 91400 Orsay (FR); Charrette, Gérard, 91430 Igny (FR); Schlossers, Christophe, 92290 Chatenay-Malabry (FR)
(74) Mandataire: Hauer, Bernard

(56) Documents cités:
- EP-A- 0 493 228
- FR-A- 2 753 785
- US-A- 5 860 619

## Description

La présente invention concerne un dispositif de localisation d'un objet, ainsi qu'une application de ce dispositif.

L'invention concerne plus précisément un dispositif comportant un détecteur optique qui comprend
- un moyen de prise de vues qui est susceptible de former des images de la scène entourant ledit objet ; et
- une unité de traitement d'image qui est susceptible d'identifier l'objet dans les images formées par ledit moyen de prise de vues et de localiser ledit objet à partir de sa position dans lesdites images.

Un tel dispositif de localisation peut notamment être intégré dans un dispositif destiné à guider un missile, par exemple un missile antichar, vers une cible, et être utilisé pour localiser cette cible de manière à permettre le guidage du missile. De façon connue (voir document FR-2 753 785), un tel dispositif de guidage comporte généralement
- des organes de pilotage qui sont commandés conformément à des ordres de pilotage ;
- un dispositif de localisation de la cible ;
- une source d'informations inertielles ; et
- une unité centrale qui détermine, à partir d'informations reçues dudit dispositif de localisation et de ladite source d'informations inertielles, des ordres de pilotage qui sont transmis auxdits organes de pilotage.

On sait que dans une telle application, la localisation de la cible peut être perturbée, notamment
- par un masquage temporaire de la cible, par exemple par un obstacle naturel ou artificiel (fumée, maison, ...). Un tel masquage nuit à la robustesse de la boucle de guidage mise en oeuvre par ledit dispositif de guidage. En effet, la perte de la cible dans une image peut entraîner sa perte définitive et donc une perturbation irrémédiable du procédé de localisation et ainsi l'échec de la mission ; et
- par un bruit de visée.

On sait que le bruit de visée peut avoir pour origine, notamment :
- un mouvement imprévisible du tireur, en particulier dans le cas d'un missile antichar ;
- le délestage du poste de tir à la sortie du missile, dans le cas d'un missile porté ; et
- la traction d'un fil de liaison entre le poste de tir et le missile, généralement en fin de vol.

Un tel bruit de visée peut provoquer un déplacement de forte amplitude du dispositif de localisation de cible pendant des durées de quelques centaines de millisecondes, ce qui rend nécessaire l'utilisation d'un détecteur optique présentant un champ de vision (ou champ de prise d'image) très large, pour ne pas perdre la cible. Un tel champ limite bien entendu la bande passante du détecteur optique.

Par le document US-5 860 619, on connaît un système de localisation du type tête chercheuse, qui est monté sur un missile et est destiné à localiser une cible. A cet effet, il comporte notamment un moyen de prise de vues, une unité de traitement d'image et trois gyromètres mesurant les mouvements du missile par rapport aux axes de tangage, roulis et lacet, c'est-à-dire dans l'espace. Ce document antérieur prévoit de transposer les informations d'image (reçues de l'unité de traitement d'image) provenant d'images successives dans un même système de référence, au moyen d'un circuit de transformation de coordonnées, auquel sont appliquées les mesures réalisées par les gyromètres.

La présente invention a pour objet de remédier aux inconvénients précités. Elle concerne un dispositif, à coût réduit et très robuste, qui permet de localiser un objet, même en présence de bruit et/ou d'un masquage temporaire de l'objet.

A cet effet, selon l'invention, ledit dispositif pour localiser un objet, comportant
- un détecteur optique qui comprend :
   . un moyen de prise de vues qui est susceptible de former des images de la scène entourant ledit objet ; et
   . une unité de traitement d'image qui est susceptible d'identifier l'objet dans les images formées par ledit moyen de prise de vues et de localiser ledit objet à partir de sa position dans lesdites images ;
- au moins un gyromètre qui est susceptible de mesurer un angle de changement d'orientation dudit détecteur optique ; et
- une unité centrale,
est remarquable en ce que ledit gyromètre est formé de manière à mesurer un angle de changement d'orientation suivant une direction déterminée qui correspond à l'un de deux axes définissant un plan de référence du détecteur optique, dans lequel sont formées lesdites images, et en ce que ladite unité centrale est formée de manière
- à convertir ledit angle de changement d'orientation mesuré par le gyromètre en une distance sur ledit plan de référence selon ledit axe correspondant à ladite direction déterminée ;
- à utiliser cette distance pour estimer la position de l'objet dans une image actuelle, à partir de sa position dans une image précédente ; et
- à commander ladite unité de traitement d'image de sorte qu'elle recherche l'objet, dans une partie d'image prédéterminée qui est définie autour de ladite position estimée de l'objet.

Ainsi, grâce à l'estimation de la position de l'objet mise en oeuvre à l'aide des mesures réalisées par le(s) gyromètre(s), on peut réduire, selon l'axe correspondant à ladite direction de changement d'orientation, la partie d'image à traiter, ce qui permet d'augmenter la bande passante de l'unité de traitement d'image et donc de réduire la durée des traitements. Ceci permet également d'utiliser un détecteur optique présentant un champ de vision réduit selon ledit axe et donc un coût plus faible.

En outre, grâce auxdites mesures du gyromètre, on ne perd jamais l'objet, puisqu'on connaît toujours une position estimée de ce dernier. Par conséquent, le procédé de localisation n'est jamais irrémédiablement perturbé. même en présence d'images qui sont inexploitables par l'unité de traitement d'image, par exemple lors d'un masquage de l'objet.

Par ailleurs, ledit dispositif de localisation présente un coût réduit, en raison notamment du faible coût d'un gyromètre.

On notera que, pour des raisons de simplification, on parle d'angle dans le cadre de la présente invention, alors que les gyromètres délivrent une vitesse angulaire. Toutefois, les mesures gyrométriques sont échantillonnées à une fréquence fixe de sorte que les notions d'angle et de vitesse angulaire sont identiques à un coefficient connu près.

Dans un mode de réalisation préféré, le dispositif conforme à l'invention comporte deux gyromètres susceptibles de mesurer des angles de changement d'orientation, respectivement suivant deux directions différentes, relatives de préférence aux angles de site et de gisement. Ceci permet de réduire la partie d'image traitée selon deux directions différentes, c'est-à-dire dans tout ledit plan de référence.

On notera que le dispositif conforme à l'invention combine, de préférence
- un ou deux gyromètres à large bande passante (entre 75 et 100 Hz), mais à performances statiques limitées ; et
- une unité de traitement d'image à faible bande passante (inférieure à 30 Hz), mais à erreur statique très faible.

Par ailleurs, de façon avantageuse, ladite unité centrale utilise les informations fournies par l'unité de traitement d'image, concernant la position de l'objet dans au moins une image, pour compenser la dérive dudit gyromètre.

La présente invention concerne également un dispositif pour guider un missile, notamment un missile antichar, vers une cible, dispositif de guidage du type comportant :
- des organes de pilotage qui sont commandés conformément à des ordres de pilotage ;
- un dispositif de localisation de la cible ;
- une source d'informations inertielles ; et
- une unité centrale qui détermine, à partir d'informations reçues dudit dispositif de localisation et de ladite source d'informations inertielles, des ordres de pilotage qui sont transmis auxdits organes de pilotage.

Selon l'invention, ce dispositif de guidage est remarquable en ce que ledit dispositif de localisation est du type précité.

Les figures du dessin annexé feront bien comprendre comment l'invention peut être réalisée. Sur ces figures, des références identiques désignent des éléments semblables.
La figure 1 est le schéma synoptique d'un dispositif de localisation conforme à l'invention.
La figure 2 illustre schématiquement une image contenant l'objet à localiser et permettant d'expliquer la mise en oeuvre de la présente invention.

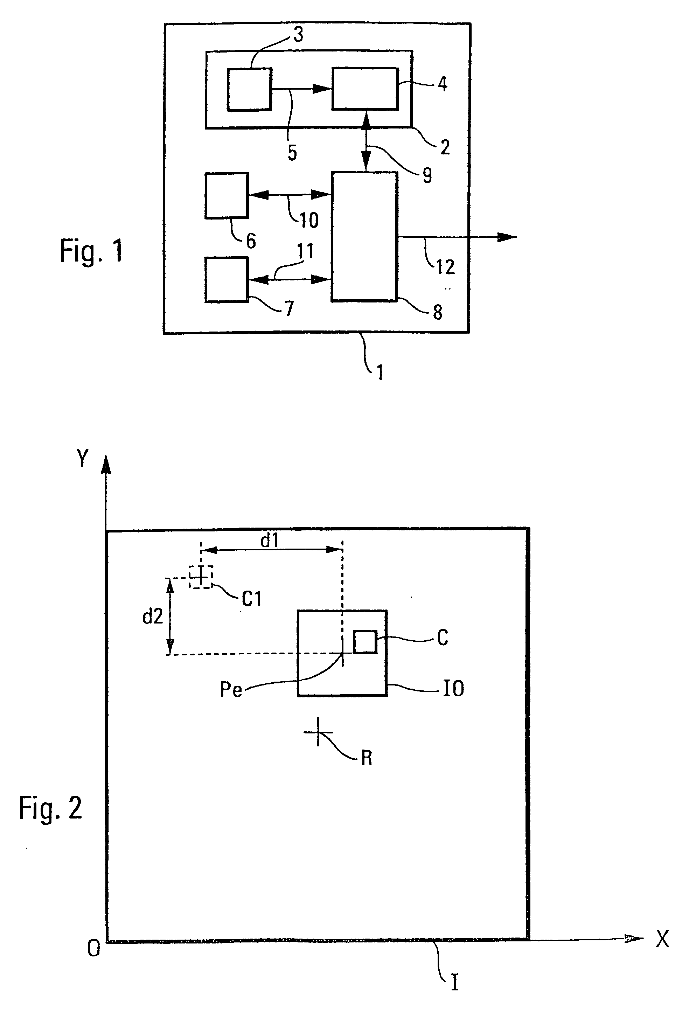

Le dispositif 1 conforme à l'invention et représenté schématiquement sur la figure 1 est destiné à localiser un objet C, en particulier une cible tel qu'un char par exemple.

De façon connue, ledit dispositif 1 comporte un détecteur optique 2 qui comprend :
- un moyen de prise de vues 3, par exemple une caméra usuelle à rayonnement visible ou une caméra infrarouge, qui est susceptible de former des images de la scène entourant ledit objet C ; et
- une unité de traitement d'image 4, de type usuel, qui est reliée audit moyen de prise de vues 3 par une liaison 5, qui est susceptible, d'une part, d'identifier l'objet C dans les images I formées par ledit moyen de prise de vues 3, et, d'autre part, de localiser ledit objet C à partir de sa position dans lesdites images I.

Selon l'invention, ledit dispositif 1 comporte de plus
- deux gyromètres 6 et 7, chacun desdits gyromètres 6 et 7 étant susceptible de mesurer un angle de changement d'orientation dudit détecteur optique 2, suivant une direction déterminée qui correspond à un axe OX,OY d'un plan de référence OXY du détecteur optique 2, dans lequel plan OXY sont formées lesdites images I. L'un 6 desdits gyromètres 6 et 7 mesure un angle de gisement et l'autre 7 un angle de site. Ces angles de site et de gisement sont, de préférence, les angles de site et de gisement du moyen de prise de vues 3 et
- une unité centrale 8 qui est reliée par l'intermédiaire de liaisons 9 à 11 respectivement à l'unité de traitement d'image 4, et aux gyromètres 6 et 7.

L'unité centrale 8 utilise les angles de changement d'orientation mesurés par les gyromètres 6 et 7, pour estimer la position actuelle Pe de l'objet C dans une image actuelle I (munie d'un réticule central R), à partir de sa position C1 dans une image précédente, comme on peut le voir sur la figure 2, et elle commande l'unité de traitement d'image 4 de sorte que cette dernière recherche l'objet C, dans une partie d'image (ou surface de recherche) IO prédéterminée qui est centrée sur ladite position estimée Pe de l'objet C.

Pour ce faire, les mesures d'angle réalisées par les gyromètres 6 et 7 sont converties dans des distances correspondantes sur ledit plan de référence OXY, dans lequel sont formées les images I. Dans l'exemple représenté sur la figure 2
- l'angle de gisement mesuré par le gyromètre 6 correspond à une distance d1, selon l'axe OX qui représente un axe horizontal ; et
- l'angle de site mesuré par le gyromètre 7 correspond à une distance d2, selon l'axe OY qui représente un axe vertical orthogonal à l'axe OX.

Ainsi, à partir:
- d'une position antérieure C1 de l'objet qui est connue, soit à partir de traitements mis en oeuvre par l'unité de traitement d'image 4 sur une image précédente, soit à partir d'une estimation précédente faite à l'aide de mesures antérieures des gyromètres 6 et 7 ; et
- desdites distances d1 et d2,
l'unité centrale 8 estime la position Pe actuelle de l'objet C, qui n'est toutefois pas particulièrement précise en raison de la précision réduite des gyromètres 6 et 7.

Puis, elle commande l'unité de traitement d'image 4 pour que cette dernière cible la recherche de l'objet C autour de cette position estimée Pe, dans la partie d'image IO, de manière à affiner la recherche.

Par conséquent, grâce à l'estimation préalable de la position Pe de l'objet C sur l'image I, on peut réduire la taille de la surface de recherche IO sur ladite image I, ce qui permet d'augmenter la bande passante de l'unité de traitement d'image 4.

On notera qu'une réduction du nombre de pixels à traiter dans un rapport supérieur à 20 est ainsi tout à fait envisageable.

De plus, selon l'invention, on peut poursuivre le processus de localisation, même en présence d'images inexploitables, grâce à des estimations de position successives, faites à partir des mesures réalisées par les gyromètres 6 et 7.

On notera qu'une image est considérée comme inexploitable lorsque l'unité 4 n'est pas en mesure d'identifier l'objet C sur cette image
- soit que l'objet soit masqué, par exemple par un obstacle naturel ou artificiel ;
- soit que l'objet soit sorti de l'image, par exemple suite à un mouvement intempestif du moyen de prise de vues 3.

Bien entendu, au lieu ou en complément de la réduction de la zone de recherche IO, on peut également prévoir un moyen de prise de vues 3 qui présente un champ de vision réduit et forme des images I plus petites représentant une partie réduite de l'environnement autour de l'objet.

En outre, en raison notamment du faible coût des gyromètres 6 et 7, le dispositif de localisation 1 présente un coût réduit.

Par ailleurs, selon l'invention, ladite unité centrale 8 utilise les informations fournies par l'unité de traitement d'image 4, concernant la position de l'objet C dans des images I, pour compenser une éventuelle dérive des gyromètres 6 et 7.

Bien entendu, au lieu d'utiliser deux gyromètres 6 et 7, il est possible dans le cadre de la présente invention de ne prévoir qu'un seul gyromètre. Toutefois, dans ce cas, la zone de recherche IO est uniquement réduite selon l'un des deux axes OX et OY, par exemple suivant l'axe OY si le dispositif 1 comporte uniquement le gyromètre 7 mesurant les angles de site.

Dans le cadre de la présente invention, le ou les gyromètres peuvent bien entendu mesurer d'autres angles de changement d'orientation que les angles de site et de gisement précités.

Une application préférée non représentée du dispositif de localisation 1 conforme à l'invention concerne son intégration dans un dispositif de guidage d'un missile vers une cible, en particulier un char, ledit dispositif 1 étant alors utilisé pour localiser la cible à atteindre.

A titre d'exemple, un tel dispositif de guidage peut comporter
- des organes de pilotage qui sont commandés conformément à des ordres de pilotage ;
- ledit dispositif 1 de localisation de la cible C ;
- une source d'informations inertielles ; et
- une unité centrale qui détermine, à partir d'informations reçues dudit dispositif de localisation 1 par l'intermédiaire d'une liaison 12 et de ladite source d'informations inertielles, des ordres de pilotage qui sont transmis auxdits organes de pilotage.

Dans ce cas, on peut avantageusement utiliser des gyromètres 6 et 7 qui présentent des biais de classe 1°/s et une erreur de facteur d'échelle de quelques pour cents.

On notera que, grâce à l'invention, on obtient ainsi une solution particulièrement simple et efficace pour remédier aux masquages de la cible, par la fumée du moteur du missile devant être guidé.

## Revendications

1. Dispositif pour localiser un objet (C), ledit dispositif (1) comportant :
- un détecteur optique (2) qui comprend
. un moyen de prise de vues (3) qui est susceptible de former des images de la scène entourant ledit objet (C) ; et
. une unité de traitement d'image (4) qui est susceptible d'identifier l'objet (C) dans les images formées par ledit moyen de prise de vues (3) et de localiser ledit objet (C) à partir de sa position dans lesdites images ;
- au moins un gyromètre (6, 7) qui est susceptible de mesurer un angle de changement d'orientation dudit détecteur optique (2) ; et
- une unité centrale (8),
**caractérisé en ce que** ledit gyromètre (6, 7) est formé de manière à mesurer un angle de changement d'orientation suivant une direction déterminée qui correspond à l'un de deux axes (OX, OY) définissant un plan de référence (OXY) du détecteur optique (2), dans lequel sont formées lesdites images (I), et **en ce que** ladite unité centrale (8) est formée de manière
- à convertir ledit angle de changement d'orientation mesuré par le gyromètre (6, 7) en une distance sur ledit plan de référence (OXY) selon ledit axe correspondant à ladite direction déterminée
- à utiliser cette distance pour estimer la position (Pe) de l'objet (C) dans une image actuelle (I), à partir de sa position (C1) dans une image précédente ; et
- à commander ladite unité de traitement d'image (4) de sorte qu'elle recherche l'objet (C), dans une partie d'image (IO) prédéterminée qui est définie autour de ladite position estimée (Pe) de l'objet (C).

2. Dispositif selon la revendication 1,
**caractérisé en ce qu'**il comporte deux gyromètres (6, 7) susceptibles de mesurer des angles de changement d'orientation, respectivement suivant deux directions différentes.

3. Dispositif selon l'une des revendications 1 et 2,
**caractérisé en ce que** ledit angle de changement d'orientation est l'angle de site.

4. Dispositif selon l'une des revendications 1 et 2,
**caractérisé en ce que** ledit angle de changement d'orientation est l'angle de gisement.

5. Dispositif de guidage d'un engin volant vers une cible, ledit dispositif comprenant :
- des organes de pilotage qui sont commandés conformément à des ordres de pilotage ;
- un dispositif de localisation (1) de la cible (C)
- une source d'informations inertielles ; et
- une unité centrale qui détermine, à partir d'informations reçues dudit dispositif de localisation (1) et de ladite source d'informations inertielles, des ordres de pilotage qui sont transmis auxdits organes de pilotage,
**caractérisé en ce que** ledit dispositif de localisation (1) est tel que le dispositif spécifié sous l'une quelconque des revendications 1 à 5.

## Patentansprüche

1. Einrichtung zur Ortung eines Objekts ( C), wobei die Einrichtung (1) Folgendes umfasst:
- einen optischen Detektor (2), der besteht aus:
• einem Bildaufnahmemittel (3), das Bilder von der Umgebung um das Objekt ( C) erzeugen kann; und
• eine Bildbearbeitungseinheit (4), die das Objekt (C ) auf den durch das Bildaufnahmemittel (3) erzeugten Bildem erkennen und das Objekt (C ) ausgehend von seiner Position auf diesen Bildem orten kann;
- mindestens ein Gyrometer (6, 7), das einen Richtungsänderungswinkel des optischen Detektors (2) messen kann; und
- eine Zentraleinheit (8),
**dadurch gekennzeichnet, dass** das Gyrometer (6, 7) so konzipiert ist, dass es einen Winkel der Richtungsänderung entlang einer bestimmten Richtung misst, die einer der beiden Achsen (OX, OY) entspricht, die eine Bezugsebene (OXY) des optischen Detektors (2) definieren, in der die Bilder (l) erzeugt werden, und dadurch, dass die Zentraleinheit (8) so konzipiert ist, dass
- sie den vom Gyrometer (6, 7) gemessenen Richtungsänderungswinkel in eine Entfernung in der Bezugsebene (OXY) entlang derAchse umwandelt, die der bestimmten Richtung entspricht;
- sie diese Entfernung benutzt, um die Position (Pe) des Objekts (C ) auf einem aktuellen Bild (l) ausgehend von seiner Position (C1) auf einem vorhergehenden Bild zu schätzen; und
- die Bildbearbeitungseinheit (4) so steuert, dass sie das Objekt (C ) in einem vorbestimmten Bildteil (lO), der um die geschätzte Position (Pe) des Objekts (C ) herum definiert ist, sucht.

2. Einrichtung nach Anspruch 1,
**dadurch gekennzeichnet, dass** sie zwei Gyrometer (6, 7) umfasst, die Richtungsänderungswinkel jeweils entlang zweier verschiedener Richtungen messen können.

3. Einrichtung nach Anspruch 1 oder 2,
**dadurch gekennzeichnet, dass** der Richtungsänderungswinkel der Zielhöhenwinkel ist.

4. Einrichtung nach Anspruch 1 oder 2,
**dadurch gekennzeichnet, dass** der Richtungsänderungswinkel der Peilwinkel ist.

5. Vorrichtung zur Lenkung eines Flugkörpers zu einem Ziel, wobei die Vorrichtung Folgendes umfasst:
- Steuerorgane, die nach Steuerbefehlen gesteuert werden;
- eine Einrichtung (1) zur Ortung des Ziels (C );
- eine Quelle von Trägheitsinformationen; und
- eine Zentraleinheit, die ausgehend von Informationen, die sie von der Ortungseinrichtung (1) und der Quelle von Trägheitsinformationen erhalten hat, Steuerbefehle ermittelt, die zu den Steuerorganen übertragen werden,
**dadurch gekennzeichnet, dass** die Ortungseinrichtung (1) der in einem der Ansprüche 1 bis 5 spezifizierten Einrichtung entspricht.

## Claims

1. Device for locating an object (C), the said device (1) comprising:
- an optical detector (2) which comprises:
. a picture capture means (3) which is able to form images of the scene surrounding the said object (C); and
. an image processing unit (4) which is able to identify the object (C) in the images formed by the said picture capture means (3) and to locate the said object (C) on the basis of its position in the said images;
- at least one rate gyro (6, 7) which is able to measure an angle of change of orientation of the said optical detector (2); and
- a central unit (8),
**characterized in that** the said rate gyro (6, 7) is formed in such a way as to measure an angle of change of orientation along a determined direction which corresponds to one of two axes (OX, OY) defining a reference plane (OXY) of the optical detector (2), in which the said images (I) are formed, and **in that** the said central unit (8) is formed in such a way as:
- to convert the said orientation change angle measured by the rate gyro (6, 7) into a distance on the said reference plane (OXY) along the said axis corresponding to the said determined direction;
- to use this distance to estimate the position (Pe) of the object (C) in a current image (I), on the basis of its position (C1) in a previous image; and
- to operate the said image processing unit (4) in such a way that it searches for the object (C), in a predetermined image part (IO) which is defined around the said estimated position (Pe) of the object (C).

2. Device according to Claim 1,
**characterized in that** it comprises two rate gyros (6, 7) able to measure angles of change of orientation, respectively along two different directions.

3. Device according to one of Claims 1 and 2,
**characterized in that** the said angle of change of orientation is the angle of elevation.

4. Device according to one of Claims 1 and 2,
**characterized in that** the said angle of change of orientation is the angle of bearing.

5. Device for guiding a flying craft to a target, the said device comprising:
- control members which are operated in accordance with control orders;
- a device (1) for locating the target (C);
- a source of inertial information; and
- a central unit which determines, on the basis of information received from the said locating device (1) and the said source of inertial information, control orders which are transmitted to the said control members,
**characterized in that** the said locating device (1) is such as the device specified under any one of Claims 1 to 5.
